# EUROPEAN PATENT APPLICATION

(11) **EP 4 725 736 A1**
(43) Date of publication of application: **15.04.2026**
(21) Application number: 24205371.8
(22) Date of filing: 08.10.2024
(51) Int. Cl.: B60K 17/04, F16H 57/032, F16H 57/08, F16H 57/04

(54) **TRANSMISSION HOUSING STRUCTURE**

(71) Applicant: Meritor Heavy Vehicle Systems Cameri SpA, 28062 Cameri (NO) (IT)
(72) Inventor: Tiziani, Eugenio, 28062 Cameri (IT)
(74) Representative: Whitfield, Jack Stephen

(57) **Abstract**

Aspects of the present invention relate to a transmission housing structure comprising a hub casing accommodating gears of the transmission and including an axial end face on one side in an axial direction and a heat dissipation member attached to the outer surface of the axial end face of the hub casing. The heat dissipation member is made of a material with higher thermal conductivity than a material from which the hub casing is made.

## Description

### Technical Field

The present disclosure relates to a transmission housing structure. Aspects of the invention relate to a planetary hub reduction, to a planetary hub reduction axle, and a vehicle comprising the planetary hub reduction axle.

### Background

It is known to provide a transmission housing structure comprising a hub casing accommodating and/or supporting gears of the transmission. In particular, vehicles such as trucks and heavy-duty vehicles often use axles equipped with a planetary hub reduction, which is accommodated in a hub casing. The current trend is to increase the number of planetary gears in the hub reduction in order to increase the load capacity and the performance of the axle. By increasing the number of planetary gears, the number of components generating heat through friction increases, and consequently the amount of heat generated in the planetary hub reduction increases. However, the heat dissipation capacity of the planetary hub reduction, particularly of the hub casing, can be limited. Overheating of the hub reduction would be a serious problem, as it can affect the function of the transmission and have a detrimental effect on service life.

It is an aim of the present invention to try to reduce the risk of the hub reduction overheating.

### Summary of Invention

Aspects and embodiments of the invention provide a transmission housing structure, a planetary hub reduction, a planetary hub reduction axle, and a vehicle comprising the planetary hub reduction axle as claimed in the appended claims.

According to an aspect of the present invention there is provided a transmission housing structure comprising a hub casing accommodating gears of the transmission and including an axial end face on one side in an axial direction and a heat dissipation member attached to the outer surface of the axial end face of the hub casing. The heat dissipation member is made of a material with higher thermal conductivity than a material from which the hub casing is made.

By providing the heat dissipation member, which is attached to the outer surface of the axial end face of the hub casing and is made of a material with relatively high thermal conductivity, the heat dissipation capacity of the hub casing can be improved without affecting the design of the overall structure. This reduces the risk of overheating without significantly redesigning existing parts of the conventional structure. Therefore, a very cost-efficient improvement to the conventional design is provided.

Optionally, the heat dissipation member may comprise a base portion having first and second surfaces on opposite sides of the base portion. The first surface may be attached to the hub casing and the second surface may be provided with a cooling structure.

Optionally, the base portion may be substantially formed in the shape of a disc.

By providing the disc-shape base portion, a large contact area with the hub casing is achieved, which facilitates heat transfer from the hub casing to the heat dissipation member. By providing the cooling structure, optimized heat transfer from the heat dissipation member to the environment is achieved, thereby increasing the heat dissipation capacity of the transmission housing structure.

The cooling structure may comprise cooling fins projecting from the second surface of the base portion.

The cooling fins increase the surface area of the heat dissipation member exposed to the environment. This helps to improve heat transfer between the heat dissipation member and the environment.

The hub casing may be configured to accommodate a planetary gear comprising a sun gear, at least two planet gears, and a ring gear. The hub casing may be configured to rotatably support the planet gears so as to serve as a planetary carrier of the planetary gear.

As the hub casing serves as the planetary carrier, a compact design of the transmission housing structure accommodating a planetary gear is ensured, while the heat dissipation capacity can be improved.

A thermal compound may be interposed between the heat dissipation member and the outer surface of the axial end face of the hub casing.

By using the thermal compound, any air gaps or spaces between the heat dissipation member and the outer surface of the axial end face of the hub casing, which would act as thermal insulation, can be eliminated. Thus, heat transfer from the hub casing to the heat dissipation member can be maximized.

The material of which the hub casing is made has a thermal conductivity less than 25 % of the thermal conductivity of the material of which the heat dissipation member is made.

By providing the heat dissipation member made of a material having a much higher thermal conductivity than the material of the hub casing, the heat dissipation capacity of the transmission housing structure can be improved without changing the material or design of the hub casing.

The hub casing may be made of cast iron and the heat dissipation member may be made of aluminum or aluminum alloy.

By using cast iron as the material for the hub casing, established manufacturing processes do not need to be changed and good economics in terms of manufacturing costs can be ensured. By using aluminum or aluminum alloy as the material for the heat dissipation member, high thermal conductivity of the heat dissipation member can be achieved.

According to another aspect of the invention, there is provided a planetary hub reduction comprising a sun gear rotationally fixed to an input shaft and having a rotational axis, at least two planet gears, the planet gears revolving around the rotational axis of the sun gear and meshing with the sun gear, a ring gear coaxially arranged with the sun gear and meshing with the planet gears, and the transmission housing structure according to any of the preceding aspects.

By using the transmission housing structure comprising the heat dissipation member attached to the hub casing accommodating the planetary gear, the heat dissipation capacity of the planetary hub reduction can be improved. The risk of overheating of the planetary hub reduction can therefore be reduced.

According to another aspect of the invention, there is provided a planetary hub reduction axle comprising the planetary hub reduction according to the preceding aspect.

The planetary hub reduction axle comprises the planetary hub reduction which provides a reduced risk of overheating of the planetary hub reduction. Thus, excellent performance characteristics and improved service life of the planetary hub reduction axle can be achieved.

According to another aspect of the invention, there is provided a vehicle comprising the planetary hub reduction axle according to the preceding aspect.

According to another aspect of the invention, there is provided a kit of parts for fixing to a transmission housing structure. The transmission housing structure comprises a hub casing accommodating gears of the transmission and including an axial end face on one side in an axial direction. The kit of parts comprises: a heat dissipation member configured to be attached to the outer surface of the axial end face of the hub casing. The heat dissipation member is made of a material with a higher thermal conductivity than a material from which the hub casing is made. The kit of parts further comprises a thermal compound (TG) configured to be interposed between the heat dissipation member and the outer surface of the axial end face of the hub casing.

According to another aspect of the invention, there is provided a heat dissipation member for fixing to a transmission housing structure. The transmission housing structure comprises a hub casing accommodating gears of the transmission and includes an axial end face on one side in an axial direction (A). The heat dissipation member is configured to be attached to the outer surface of the axial end face of the hub casing. The heat dissipation member is made of a material with a higher thermal conductivity than a material from which the hub casing is made.

The heat dissipation member may comprise: a base portion having first and second surfaces on opposite sides of the base portion. The first surface may be configured to be attachable to the hub casing. The second surface may be provided with a cooling structure- The cooling structure may comprise cooling fins projecting from the second surface of the base portion (201).

The heat dissipation member the base portion may be substantially disc shaped.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of Drawings

One or more embodiments of the invention will now be described, by way of example only, with reference to the accompanying drawings, in which:
FIG. 1 is a schematic perspective view of a transmission housing structure according to an embodiment of the invention; and
FIG. 2 is a schematic cross-sectional view of the transmission housing structure shown in FIG. 1.

### Detailed Description

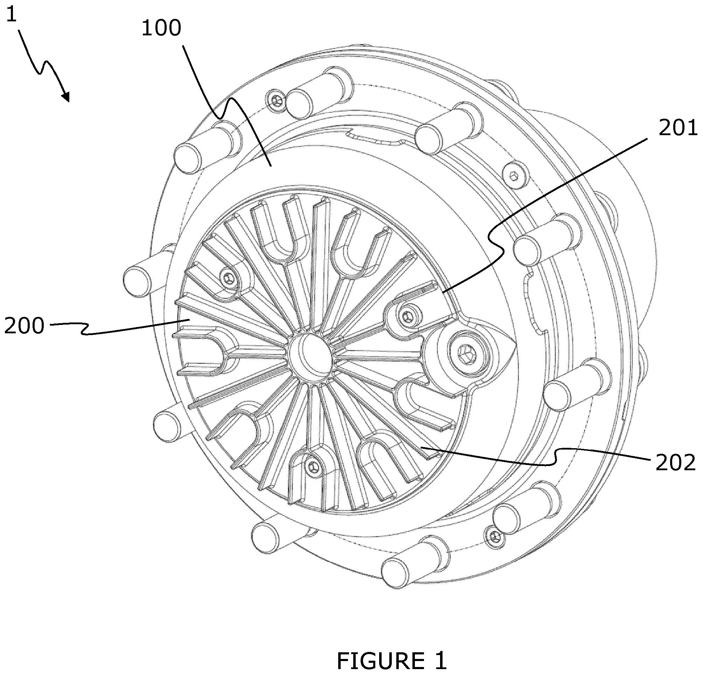

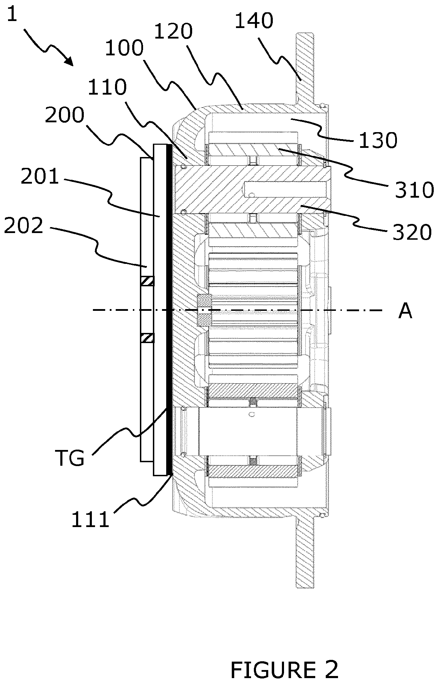

An embodiment of the present invention is described below with reference to FIG. 1 and FIG. 2.

With reference to FIG. 1, a schematic perspective view of a transmission housing structure 1 is shown. With reference to FIG. 2, a schematic cross-sectional view of the transmission housing structure along an axial direction A is shown.

In the present embodiment, the transmission housing structure 1 is exemplified as a part of a planetary hub reduction provided on a driven axle of a vehicle. Such planetary hub reduction axles are often used, for example, in heavy-duty vehicles to provide an appropriate reduction ratio between the torque at the drive shaft and the torque at the wheels of the axle.

As shown in FIG. 1 and FIG. 2, the transmission housing structure 1 comprises a hub casing 100. The hub casing 100 is substantially formed as a cup-shaped member circumferentially extending around the axial direction A. The hub casing 100 comprises a disc-shaped wall portion 110 extending perpendicular to the axial direction A and a cylindrical wall portion 120 extending parallel to the axial direction A. In this embodiment, the disc-shaped wall portion 110 is substantially circular. A curved transition portion connects the disc-shaped wall portion 110 to the cylindrical wall portion 120. The hub casing 100 provides a recessed portion 130 for accommodating gears of the transmission. According to the present embodiment, the hub casing 100 is configured to accommodate a planetary gear (only partially shown in FIG. 2). The outer peripheral surface of the hub casing 100 is provided with a flange 140 having respective holes for mounting a wheel.

The planetary gear, which can be accommodated in the hub casing 100, comprises a sun gear (not shown), planet gears 310, and a ring gear (not shown). In the present embodiment four planet gears 310 are provided. However, the number of planet gears is not particularly limited and can be selected appropriately. The sun gear is rotationally fixed to an input shaft, that is, an axle shaft driven, for example, by a power source such as an electric motor or an engine of the vehicle. The ring gear is arranged coaxially with the sun gear radially outwardly of the sun gear. The planet gears 310 are arranged between the ring gear and the sun gear, radially outward of the sun gear so as to revolve around the sun gear. Each planet gear 310 meshes with the sun gear and the ring gear.

Each planet gear 310 is supported via a shaft 320. Each shaft 320 is mechanically connected to the hub casing 100. Thus, the hub casing 100 serves as the planetary carrier of the planetary gear.

As shown in FIG. 1 and FIG. 2, the transmission housing structure 1 further comprises a heat dissipation member 200. The heat dissipation member 200 is attached to the hub casing 100. In particular, the heat dissipation member 200 is attached to an outer surface of an axial end face 111 of the hub portion 100 located opposite to the recessed portion 130. More specifically, the heat dissipation member 200 is attached to the surface of the disc-shaped wall portion 110 located opposite the recessed portion 130.

The heat dissipation member 200 comprises a base portion 201. The base portion 201 is formed substantially in the shape of a disc. The base portion is circular in this embodiment and is substantially equal in dimensions to the axial end face 111 and the disc-shaped wall portion 110 of the hub casing 100. The base portion 201 has first and second disc-shaped surfaces on opposite sides of the base portion 201. The first disc-shaped surface of the base portion 201 is attached to the outer surface of the axial end face 111 of the hub casing 100.

The heat dissipation member 200 can be attached to the hub casing 100 by a fastening arrangement. For example, the fastening arrangement could include a plurality of fastening elements such as screws. Advantageously, the heat dissipation member 200 can be easily removed for maintenance or replacement. Alternatively any other suitable fastening arrangement could be used such as an adhesive or welding.

According to the present embodiment, the heat dissipation member 200 further comprises a cooling structure 202. The cooling structure 202 is provided on the second disc-shaped surface of the base portion 201.

As shown in FIG. 1 and FIG. 2, the cooling structure 202 comprises cooling fins 202, which project from on the second disc-shaped surface of the base portion 201. The cooling fins 202 increase the surface area of the heat dissipation member 200 in order to enhance heat transfer between the heat dissipation member 200 and the environment. The heat dissipation member 200 and the cooling fins 202 can be integrally formed, for example by molding or casting.

The heat dissipation member 200 is made of a material with a higher thermal conductivity than a material from which the hub casing 100 is made.

According to the present embodiment, the hub casing is made of cast iron, which ensures good economics in terms of manufacturing costs. The thermal conductivity of cast iron is in the range of about 20 to 60 W/(m K), and is, for example, 53 W/(m K) in the present embodiment.

According to the present embodiment, the heat dissipation member 200 is made of aluminum, which has a relatively high thermal conductivity of 237 W/(m K). Alternatively, also aluminum alloy can be used as a material for the heat dissipation member 200. The thermal conductivity of aluminum alloy is in the range of about 80 up to 220 W/(m K).

A thermal compound TG (also called "*thermal paste"* or "*thermal grease"*) is interposed between the heat dissipation member 200, in particular, the first disc-shaped surface of the base portion 201, and the outer surface of the axial end face 111 of the hub casing 100. The thermal compound TG is formed by a base matrix and thermally-conductive filler. Typical matrix materials are epoxies, silicones, urethanes, and acrylates. Typical fillers include carbon micro-particles, aluminum oxide, boron nitride, zinc oxide, and aluminum nitride. By providing the thermal compound TG, any air gaps or spaces between the heat dissipation member 200 and the outer surface of the axial end face 111 of the hub casing, which would act as thermal insulation, can be eliminated. Thus, heat transfer from the hub casing to the heat dissipation member 200 can be maximized.

In some embodiments, the thermal compound TG could also act as an adhesive, to further strengthen the attachment of the dissipation member 200 and the hub casing 100.

The invention has been described above with reference to one or more specific embodiments. However, it will be appreciated that various changes and modifications can be made without departing from the scope of the invention as defined in the claims.

For example, in the above-described embodiment, the planetary gear has been exemplified as the transmission accommodated within the hub casing. However, the present invention is not particularly limited thereto. For example, the transmission housing structure can be designed to accommodate any type of transmission which would benefit from improved heat dissipation.

In the above-described embodiment, the heat dissipation member comprises the cooling structure. However, the present invention is not particularly limited thereto. The cooling structure can be omitted or designed in any appropriate shape.

The appended claims set out particular combinations of features described above. However, the scope of the present disclosure is not limited to these particular combinations claimed. Instead, the scope of the present disclosure extends to encompass any combination of features herein disclosed.

## Claims

1. A transmission housing structure (1) comprising:
a hub casing (100) accommodating gears of the transmission and including an axial end face (111) on one side in an axial direction (A), and
a heat dissipation member (200) attached to an outer surface of the axial end face (111) of the hub casing (100),
wherein the heat dissipation member (200) is made of a material with a higher thermal conductivity than a material from which the hub casing (100) is made.

2. The transmission housing structure (1) according to claim 1, wherein:
the heat dissipation member (200) comprises:
a base portion (201) having first and second surfaces on opposite sides of the base portion (201),
the first surface being attached to the hub casing (100), and
the second surface being provided with a cooling structure (202).

3. The transmission housing structure (1) according to claim 2, wherein:
the base portion (201) is substantially disc shaped.

4. The transmission housing structure (1) according to claim 2 or 3, wherein:
the cooling structure (202) comprises cooling fins (202) projecting from the second surface of the base portion (201).

5. The transmission housing structure (1) according to any of the preceding claims, wherein:
the hub casing (100) is configured to accommodate a planetary gear comprising a sun gear, at least two planet gears (310), and a ring gear, and
the hub casing (100) is configured to rotatably support the planet gears (310) so as to serve as a planetary carrier of the planetary gear.

6. The transmission housing structure (1) according to any of the preceding claims, wherein:
a thermal compound (TG) is interposed between the heat dissipation member (200) and the outer surface of the axial end face (111) of the hub casing (100).

7. The transmission housing structure (1) according to any of the preceding claims, wherein:
the material of which the hub casing (100) is made has a thermal conductivity less than 25 % of the thermal conductivity of the material of which the heat dissipation member (200) is made.

8. The transmission housing structure (1) according to any of the preceding claims, wherein:
the hub casing (100) is made of cast iron, and
the heat dissipation member (200) is made of aluminum or aluminum alloy.

9. A planetary hub reduction comprising:
a sun gear rotationally fixed to an input shaft and having a rotational axis,
at least two planet gears, the planet gears revolving around the rotational axis of the sun gear and meshing with the sun gear,
a ring gear coaxially arranged with the sun gear and meshing with the planet gears, and
the transmission housing structure according to any of the preceding claims.

10. A planetary hub reduction axle comprising the planetary hub reduction according to claim 9.

11. A vehicle comprising the planetary hub reduction axle according to claim 10.

12. A kit of parts for fixing to a transmission housing structure,
the transmission housing structure comprising a hub casing (100) accommodating gears of the transmission and including an axial end face (111) on one side in an axial direction (A),
the kit of parts comprising:
a heat dissipation member (200) configured to be attached to the outer surface of the axial end face (111) of the hub casing (100), wherein the heat dissipation member (200) is made of a material with a higher thermal conductivity than a material from which the hub casing (100) is made, and
a thermal compound (TG) configured to be interposed between the heat dissipation member (200) and the outer surface of the axial end face (111) of the hub casing (100).

13. A heat dissipation member (200) for fixing to a transmission housing structure,
the transmission housing structure comprising a hub casing (100) accommodating gears of the transmission and including an axial end face (111) on one side in an axial direction (A),
the heat dissipation member (200) configured to be attached to the outer surface of the axial end face (111) of the hub casing (100), wherein the heat dissipation member (200) is made of a material with a higher thermal conductivity than a material from which the hub casing (100) is made.

14. The heat dissipation member (200) of claim 13, wherein the heat dissipation member (200) comprises:
a base portion (201) having first and second surfaces on opposite sides of the base portion (201),
the first surface being configured to be attachable to the hub casing (100), and
the second surface being provided with a cooling structure (202), optionally wherein the cooling structure (202) comprises cooling fins (202) projecting from the second surface of the base portion (201).

15. The heat dissipation member (200) of claim 13 or claim 14, wherein the base portion (201) is substantially disc shaped.
